Europäisches Patentamt

**European Patent Office**

Office européen des brevets

(19)

(11) Numéro de publication: **0 284 497**
**B1**

(12) **FASCICULE DE BREVET EUROPEEN**

(45) Date de publication du fascicule du brevet: **30.01.91**

(51) Int. Cl.⁵: **D 04 H 3/07**

(21) Numéro de dépôt: **88400632.1**

(22) Date de dépôt: **16.03.88**

(54) **Procédé de fabrication d'éléments d'armature composites tissés en trois dimensions, machine pour sa mise en oeuvre et produit obtenu.**

(30) Priorité: **25.03.87 FR 8704126**

(43) Date de publication de la demande:
**28.09.88 Bulletin 88/39**

(45) Mention de la délivrance du brevet:
**30.01.91 Bulletin 91/05**

(84) Etats contractants désignés:
**AT BE CH DE ES FR GB IT LI NL SE**

(56) Documents cités:
**FR-A-2 315 562**
**FR-A-2 355 936**
**FR-A-2 408 676**
**FR-A-2 591 240**
**GB-A-2 159 460**

(73) Titulaire: **AEROSPATIALE SOCIETE NATIONALE INDUSTRIELLE Société Anonyme dite:**
**37, Boulevard de Montmorency**
**F-75016 Paris (FR)**

(72) Inventeur: **Cahuzac, Georges Jean Joseph**
**1410 Avenue du Duc de Lorge**
**F-33127 Saint Jean D'Illac (FR)**
Inventeur: **Monget, François**
**Résidence le Brantôme**
**F-33700 Merignac (FR)**

(74) Mandataire: **Barnay, André François**
**Cabinet Barnay 80 rue Saint-Lazare**
**F-75009 Paris (FR)**

Courier Press, Leamington Spa, England.

EP 0 284 497 B1

# Description

La presente invention est relative à la fabrication d'éléments d'armature composites tissés ou tricotés en trois dimensions en fibres textiles, minérales, synthétiques ou autres imprégnées d'une résine qui est ensuite polymérisée ou autrement durcie.

Les éléments d'armatures de ce type sont principalement, bien que non exclusivement, utilisés dans les domaines aéronautique et spatial dans lesquels ils trouvent de nombreuses applications notamment pour la réalisation de pièces devant résister à des contraintes thermo-mécaniques, comme les protections thermiques de corps rentrant dans l'atmosphère, les tuyères de fusées à poudre, les freins d'avions, ou encore devant supporter de fortes contraintes mécaniques comme les moyeux de rotors d'hélicoptères, les trains d'atterrissage, les emplantures d'ailes, bords d'attaque etc.

De nombreux procédés et appareils ont été imaginés et mis au point pour réaliser de tels éléments d'armature, mais la fabrication automatisée de pièces de forme complexe rencontre de grandes difficultés, qui conduisent à des machines très compliquées et par suite coûteuse sans pour autant que les pièces obtenues présentent toujours toutes les qualités nécessaires d'homogénéité et de résistance.

En outre les propriétés remarquables de ces éléments composites conduisent à les utiliser pour réaliser des pièces ayant des formes compliquées, évolutives, que les machines actuelles ne permettent pas de fabriquer.

Il est connu de réaliser des éléments d'armatures composites de révolution, creux, tissés en deux dimensions horizontalement autour de baguettes perpendiculaires rigides montées en couronnes concentriques sur un support rotatif, qui sont ensuite remplacées par des fils, comme décrit par exemple dans FR-A-2.395.340 au nom de la demanderesse.

Suivant une autre technique, on utilise un mandrin de support creux sur la surface duquel on dépose plusieurs nappes de fils parallèles suivant deux directions croisées, et on forme des lignes de coutures perpendiculairement à ces nappes comme décrit notamment par FR-A-2.355.936.

Suivant FR-A-2.315.562, le mandrin creux de support est métallique et démontable, forme de sect eurs espaces comportant des trous dans lesquels sont enfoncées des pointes autour desquelles sont tendus des fils formant les différentes nappes superposées entrecroisées, qui sont ensuite cousues par des rangées de coutures formées dans les intervalles entre les secteurs du mandrin.

Tous les procédés et appareils décrits dans ces documents nécessitent un mandrin creux car la liaison des nappes superposées par des coutures entraîne obligatoirement l'introduction dans le mandrin d'un dispositif pour nouer le fil introduit par l'extérieur.

De plus les coutures sont effectuées avec des aiguilles à clapet ou à chas fermé d'un emploi délicat pour les fibres fragiles, nécessitant parfois un guipage du fil.

Un autre procédé et dispositif, décrits dans FR-A-2.408.676 utilisent au contraire un mandrin plein en matière mousse sur lequel sont plantés des brins de fils rigides, dits "picots", autour desquels sont posées les nappes de fils dans deux directions différentes, et qui constituent les fils de la troisième direction.

Ce procédé présente différents inconvénients. En premier lieu les "picots" doivent être préalablement soumis à un traitement de pré-rigidification, qui augmente leur diamètre, pour permettre leur implantation.

En second lieu les "picots", qui doivent devenir partie intégrante de la pièce à réaliser, doivent par conséquent être prévus en nombre considérable, de l'ordre de plusieurs dizaines de milliers, implantés très proches les uns des autres, ce qui représente une opération extrêmement longue exigeant une grande précision.

En outre, dans le cas d'une pièce présentant une forme complexe dont la surface forme des angles ou des courbes, l'implantation des "picots" voisins, trop rapprochés, est très difficile à réaliser sans interférences entre eux, et les couloirs très étroits qu'ils délimitent ne permettent pas une pose facile des fils en nappes régulières, pose qui se révèle même impossible dans les régions où les fils changent d'orientation.

Enfin, les "picots" trop proches les uns des autres tiennent mal, notamment dans les parties courbes, ce qui se traduit par des défauts d'homogénéité dans la pièce finie.

L'invention a pour but de remédier à ces inconvénients, ainsi qu'à ceux des autres procédés et dispositifs de la technique antérieure, en fournissant un procédé et un dispositif nouveaux permettant de réaliser des éléments d'armatures, non seulement en forme de solide de révolution, mais également à profil évolutif (variations de diamètre, courbures importantes) et des formes à méplats ou même plates, ou des blocs.

L'invention a également pour but de fournir un produit nouveau présentant des propriétés d'homogénéité et de résistance bien supérieures à celles des produits de la technique antérieure.

L'invention a pour objet à cet effet un procédé de fabrication d'éléments d'armatures composites tissés en trois dimensions en fibres textiles, minérales, synthétiques ou autres, de formes complexes, à haute résistance aux contraintes thermiques, mécaniques ou thermo-mécaniques, destinés plus particulièrement à des applications dans le domaine aéronautique ou spatial, du type dans lequel on utilise un mandrin consommable en matière mousse ou similaire ayant extérieurement la forme intérieure de l'élément d'armature à réaliser, on plante des organes rigides dans le mandrin et on applique sur la surface de celui-ci des nappes successives de fils ou de fibres superposées croisées suivant au moins deux directions, on lie lesdites nappes entre elles au moyen de fils ou de fibres qui les traversent perpendiculairement, on imprègne l'ensemble d'un liant durcissable, et on retire le mandrin, caractérisé en ce que lesdits organes rigides sont des épingles implantées provisoirement dans le mandrin de manière à retenir un fil continu de fibres tendu sur lesdites épingles et en contact avec la surface du mandrin, on tend un fil continu sur lesdites épingles de manière à former successivement au moins trois nappes régulières superposées et croisées, et on introduit à travers lesdites nappes, depuis l'extérieur, un fil continu formant des boucles successives ouvertes, au moyen d'une aiguille dans laquelle passe ledit fil, et on retire lesdites épingles.

Suivant une autre caractéristique de l'invention, lesdites nappes sont retenues assemblées par une action conjuguée de serrage et de frottement des fils desdites nappes sur lesdites boucles de fil.

L'invention a également pour objet une machine pour la mise en oeuvre du procédé défini ci-dessus, du type comprenant un bâti, un axe porte-mandrin horizontal rotatif, un mandrin amovible en matière perforable monté sur ledit axe, et des moyens d'entraînement dudit axe en rotation, caractérisée en ce que le bâti porte un bras vertical au-dessus dudit axe et réglable suivant trois axes orthogonaux et comportant à son extrémité inférieure des moyens de fixation pour des dispositifs amovibles de travail et des moyens pour orienter un tel dispositif autour d'un axe horizontal.

Suivant une autre caractéristique de l'invention, il est prévu un jeu de trois dispositifs amovibles de travail différents adaptables sur ladite extrémité inférieure du bras, savoir un dispositif pour enfoncer les épingles dans le mandrin, un dispositif de pose de fil et un dispositif à aiguille pour enfoncer un fil continu formant des boucles consécutives à travers des nappes croisées de fil déposées sur le mandrin.

L'invention a enfin pour objet un produit réalisé au moyen du procédé et de la machine définis ci-dessus, caractérisé en ce qu'il est constitué par au moins trois nappes régulières de fil de fibres croisées et superposées, maintenues ensemble par serrage et frottement sur des boucles consécutives d'un fil continu introduit de l'extérieur à travers lesdites nappes au moyen d'une aiguille creuse.

La description qui va suivre, en regard des dessins annexés à titre d'exemples non limitatifs, permettra de bien comprendre comment l'invention peut être mise en pratique.

La figure 1 est une vue en perspective d'un mode de réalisation de la machine suivant l'invention.

La figure 2 est une vue en coupe longitudinale de l'extrémité de l'axe porte-mandrin et d'un mandrin en matière mousse fixé sur elle.

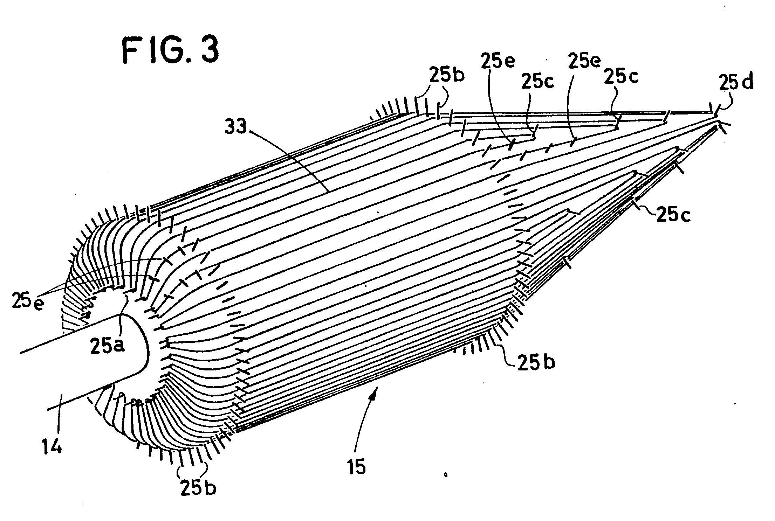

La figure 3 est une vue en perspective d'un exemple d'un élément d'armature en cours de fabrication, montrant l'agencement des épingles implantées dans le mandrin et celui du fil tendu sur ces épingles.

La figure 4 est une vue partielle en perspective montrant un premier dispositif amovible de travail, adapté pour implanter des épingles dans le mandrin, et monté à l'extrémité inférieure du bras vertical.

Les figures 5 et 6 sont des vues à plus grande échelle, montrant un autre dispositif amovible de travail, adapté pour déposer le fil sur le mandrin monté à l'extrémité inférieure du bras vertical, et des moyens d'orientation du dispositif de pose de fil.

La figure 7 est une vue à plus grande échelle du dispositif de travail à aiguille adapté pour introduire des boucles de fil continu à travers les nappes déposées sur le mandrin.

La figure 8 est une vue en coupe longitudinale, à grande échelle, de l'aiguille utilisée sur le dispositif de travail de la figure 7.

La figure 9 est une vue en coupe longitudinale d'une variante d'aiguille.

Les figures 10a à 10f sont des vues schématiques en coupe montrant les différentes phases de l'introduction des boucles de fil continu à travers les nappes déposées sur la surface du mandrin.

La figure 11 est une vue en coupe longitudinale de l'élément d'armature fini.

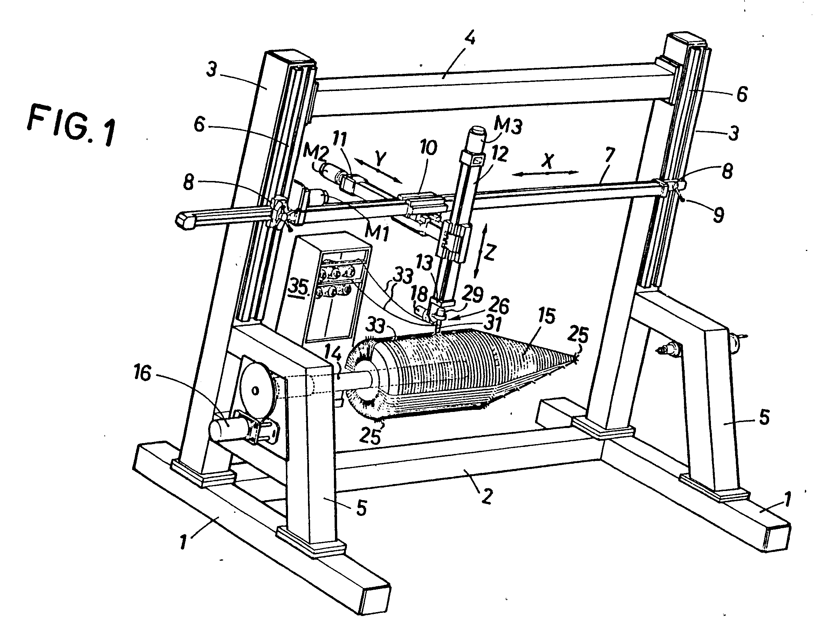

En se référant à la figure 1, la machine suivant l'invention comprend un bâti ayant deux pieds 1, une traverse inférieure 2, deux montants verticaux 3 réunis à leur partie supérieure par une seconde traverse 4 et deux supports latéraux 5.

Chaque montant vertical 3 comporte une glissière 6, et une barre transversale 7 est fixée au voisinage de ses extrémités dans des coulisseaux 8 montés dans les glissières 6 dans lesquelles ils peuvent être immobilisés par des vis 9. Grâce à cet agencement la barre 7 peut être réglée en hauteur sur les montants 3.

Sur la barre 7 est monté un chariot 10 sur lequel est monté un bras horizontal 11 coulissant transversalement et de façon réglable par rapport à la barre 7.

A l'une de ses extrémités le bras horizontal 11 porte un bras vertical 12 également monté coulissant et de façon réglable.

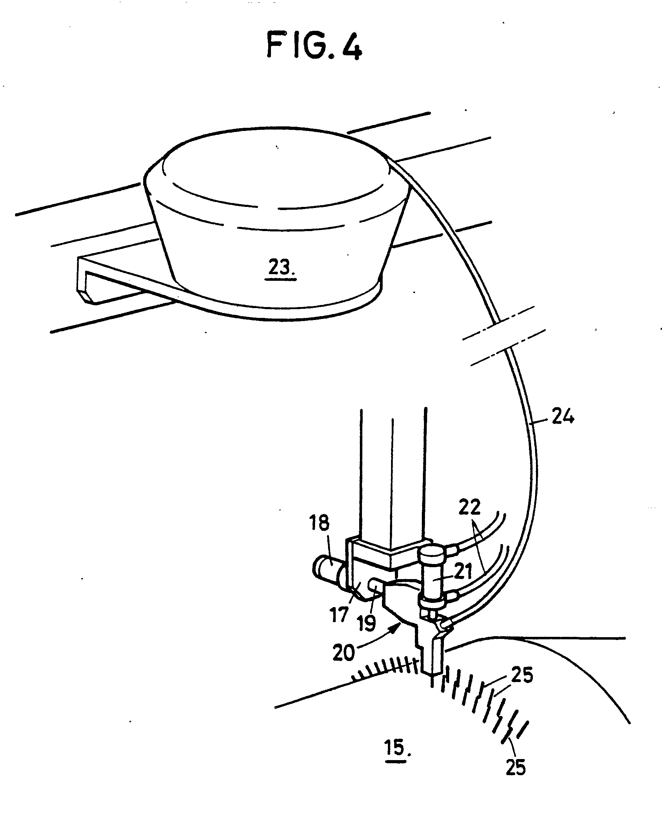

A son extrémité inférieure 13, le bras vertical 12 comporte des moyens de fixation adaptés pour recevoir un dispositif amovible de travail, plus clairement visible aux figures 4 à 7.

La machine comprend enfin un axe horizontal 14 monté rotatif dans l'un des supports latéraux 5 et adapté pour porter un mandrin 15, cet axe s'étendant ainsi parallèlement à la barre 7, au-dessous de celle-ci.

L'axe 14 est entraîné en rotation par un moteur électrique pas à pas 16 également monté sur le support latéral 5.

On comprend que grâce à l'agencement de la barre 7 et des bras 11 et 12, l'extrémité 13 peut être réglée dans toute position désirée par rapport au mandrin 15, suivant trois axes orthogonaux X, Y et Z au moyen de moteurs M1, M2 et M3 qui sont représentés, à titre d'exemple, montés sur la barre 7 et aux extrémités des bras 11 et 12 et entraînent ceux-ci suivant ces trois axes par l'intermédiaire de systèmes connus appropriés à pignon et crémaillère, vis sans fin ou autres.

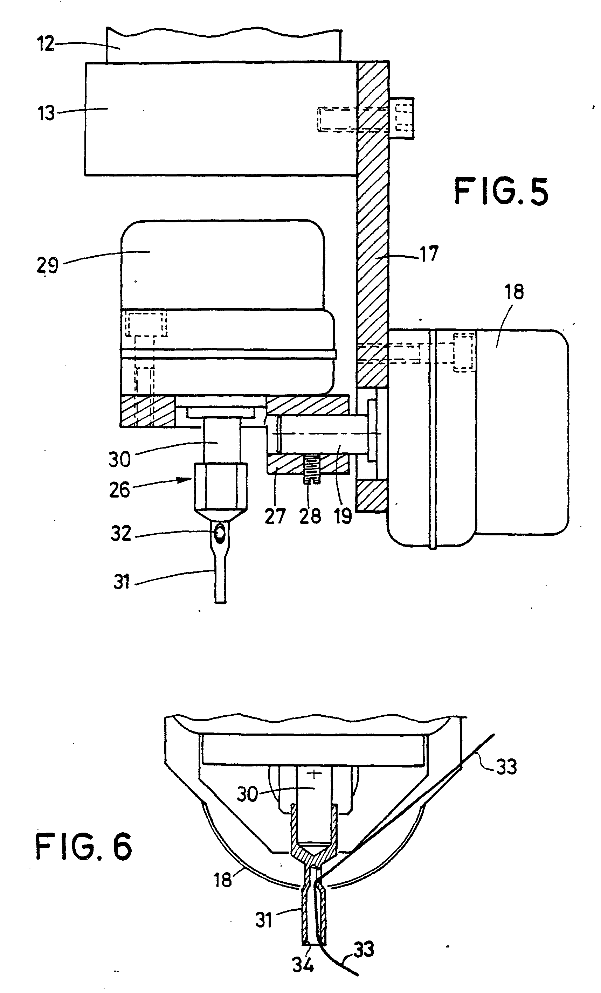

En se référant plus particulièrement aux figures 5 et 6, l'extrémité inférieure 13 du bras 12 comporte une patte 17 fixée dans son prolongement et sur laquelle est fixé un petit moteur électrique 18, par exemple un moteur pas à pas, dont l'arbre 19 horizontal s'étend à travers la patte 17.

On a représenté à la figure 4 un premier dispositif de travail, désigné par la référence 20 qui peut être monté de façon amovible sur l'arbre 19 du moteur 18.

Ce dispositif 20 est une cloueuse pneumatique de type connu comportant un vérin 21 à double effet relié par des tuyaux 22 à une source d'air comprimé et à une commande (non représentées) et une boîte-réservoir vibrante 23 contenant des épingles et reliée au dispositif 20 par un conduit 24.

Le réservoir 23 peut être monté sur le bâti de la machine ou sur un autre support approprié (non représenté).

Le montage du dispositif 20 sur l'arbre du moteur 18 permet d'orienter ce dispositif suivant un angle quelconque dans un plan vertical et de planter des épingles 25 sur tous les points désirés de la surface du mandrin 15.

Les figures 5 et 6 montrent un second dispositif de travail qui peut être monté de façon amovible sur l'arbre 19 du moteur 18.

Ce second dispositif de travail, désigné par la référence 26, est adapté pour déposer un fil sur la surface du mandrin 15, entre les épingles 25 ou autour de celles-ci.

Dans ce but, le dispositif 26 comprend un support 27 adapté pour être bloqué sur l'arbre 19 au moyen d'une vis de blocage 28.

Ce support 27 porte un petit moteur électrique pas à pas 29 dont l'arbre 30 s'étend verticalement vers le bas et porte un passe-fils constitué par un tube 31 de section aplatie, débouchant vers le bas et présentant une ouverture 32 à sa partie supérieure, un fil 33 à déposer sur le mandrin entrant dans le tube passe-fil 31 par l'ouverture 32 et sortant à l'extrémité inférieure.

Cette extrémité inférieure du tube 31 est arrondie intérieurement comme représenté en 34 afin d'éviter un risque de détérioration du fil dans le cas d'un fil fragile, et de rupture de celui-ci lorsqu'il sort du tube passe-fil 31 en formant un angle prononcé.

Le fil 33 provient d'une réserve 35 de bobines, montée sur le bâti, ou autre support approprié.

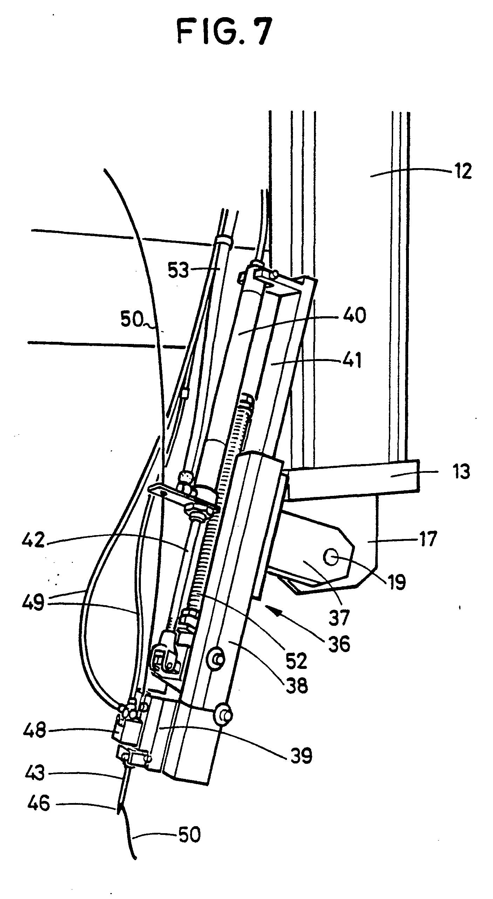

La figure 7 montre le troisième dispositif de travail, destiné à introduire des boucles d'un fil continu à travers des nappes préalablement déposées sur la surface du mandrin 15.

Ce dispositif, désigné par la référence 36, peut également être monté de façon amovible sur l'arbre 19 du moteur 18; il comprend un support 37, fixé sur l'arbre 19, sur lequel est fixé un rail 38, un bloc 39 coulissant dans le rail 38, un vérin pneumatique 40 dont le cylindre est fixé sur un prolongement 41 du rail 38, solidaire de ce dernier et dont la tige de piston 42 est reliée au bloc 39.

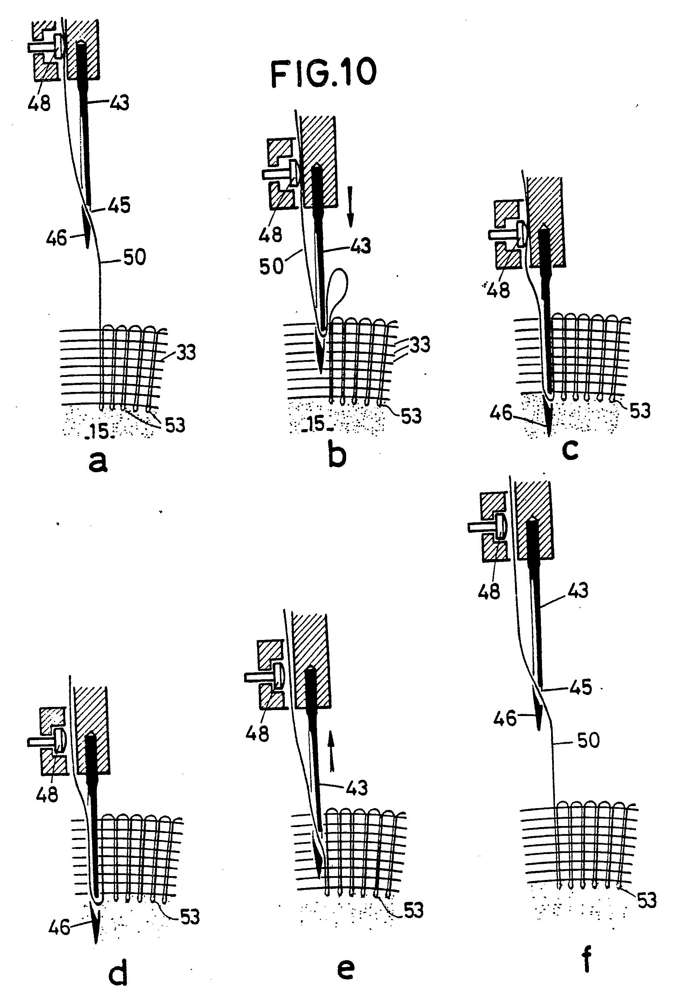

Le bloc 39 porte une aiguille 43, représentée en coupe à plus grande échelle à la figure 8, qui sera décrite plus en détails dans la suite.

L'extrémité 47 de l'aiguille, opposée à sa pointe 46, est fixée à côté d'un pince-fil pneumatique de type connu 48 monté sur le bloc 39.

Le pince-fil 48 est relié par des tuyaux 49 à une source d'air comprimé (non représentée) et un fil de fibres 50 provenant d'une source (également non représentée) s'étend à travers le pince-fil 48 et le canal 44 de l'aiguille 43 et sort de celle-ci par le chas 45.

D'une façon avantageuse un ressort de rappel 52 est prévu entre le bloc 39 et le rail 38, de telle sorte que lorsque le vérin 40, alimenté par un tuyau 53, a poussé le bloc 39 en extension et est ensuite mis à l'échappement, le ressort 52 ramène le bloc 39 et l'aiguille en arrière.

On remarquera que le dispositif 36, comme le dispositif 20, peut être orienté dans un plan vertical par le moteur 18.

Suivant le procédé de l'invention, on utilise dans une première phase le premier dispositif 20 de travail, monté sur l'extrémité du bras 12 de la machine pour implanter des épingles 25 dans le mandrin 15 en matière mousse en des points de la surface de celui-ci choisie en fonction de sa forme, pour retenir et maintenir un fil 33 tendu contre sa surface, entre ces épingles, de manière à former une nappe régulière.

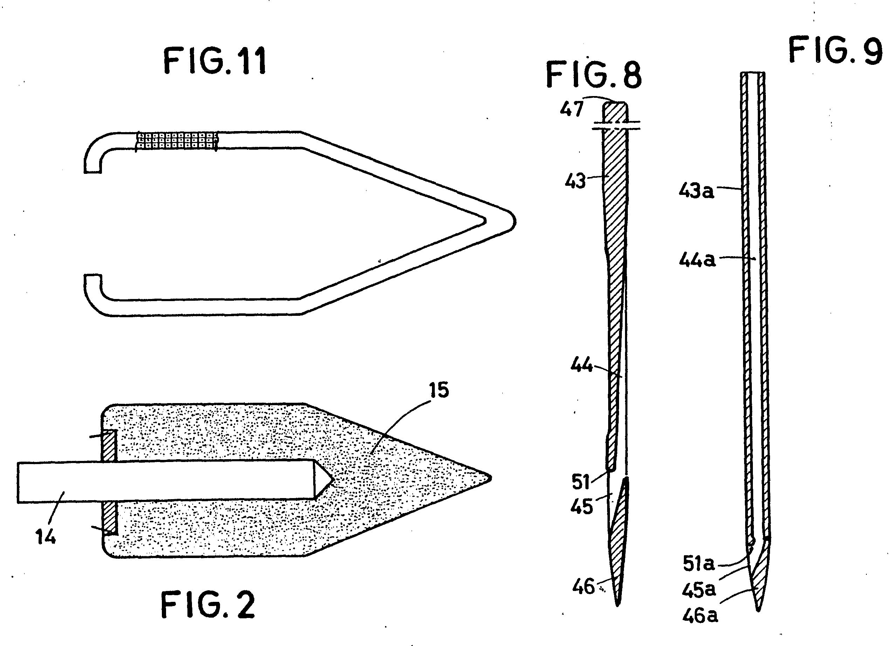

Suivant l'exemple représenté à la figure 2, le mandrin présente une forme cylindro-conique correspondant à la forme intérieure de l'élément d'armature à réaliser.

On implante par exemple une première série d'épingles 25a autour de l'axe 14, sur la section à peu près plate du mandrin. On implante ensuite par exemple deux rangées circonférentielles d'épingles 25b aux extrémités du corps cylindrique du mandrin, puis des épingles 25c échelonnées sur la partie d'extrémité conique, des épingles 25d au sommet de cette partie et enfin des épingles 25e en rangées circonférentielles sur les parties de surface du mandrin qui sont inclinées par rapport à son axe 14.

Il convient de noter que les épingles 25b ainsi que toutes celles implantées dans des surfaces du mandrin parallèles ou presque parallèles à son axe sont perpendiculaires à sa surface, tandis que les épingles 25a, 25c, 25d et 25e et d'une façon générale toutes celles implantées dans des surfaces inclinées et perpendiculaires à cet axe seront avantageusement inclinées dans le sens voulu pour que le fil tende à glisser sur elles pour venir se loger dans un angle aigu formé par chacune de ces épingles avec la surface associée du mandrin.

Pour effectuer ces implantations on déplace le dispositif 20 longitudinalement sur la surface du mandrin 15 en inclinant le dispositif 20 de façon appropriée en actionnant le moteur 18 et en faisant tourner le mandrin d'un pas après chaque course du dispositif 20 au moyen du moteur 16.

Lorsque des épingles ont été implantées sur tous les points choisis, on remplace le dispositif 20 par le dispositif 26. On fait passer un fil 33 par l'ouverture 32, dans le passe-fil 31, l'extrémité du fil sortant vers le bas par l'extrémité du passe-fil.

On fixe cette extrémité, par exemple sur l'une des épingles 25a et on déplace le dispositif 26 de la même façon que dans l'opération précédente, en tirant le fil entre les épingles 25b jusqu'au delà de l'une des épingles 25d au sommet du cône.

On fait alors tourner la mandrin d'un pas et on ramène le fil 33 en contournant l'épingle 25d, entre deux épingles 25b puis, en inclinant et en faisant descendre le dispositif 26, en contournant de la même façon une seconde épingle 25a adjacente à celle du départ.

Pour éviter une accumulation de fil au voisinage du sommet du cône, on contourne des épingles intermédiaires 25c échelonnées sur celui-ci.

Lorsqu'une première nappe régulière de fil 33 a été ainsi posée dans le sens longitudinal, on dépose une seconde nappe de fil par exemple à 90°, circonférentiellement.

Cet enroulement peut être réalisé de façon hélicoïdale, à partir par exemple de l'une des épingles 25a, en faisant tourner le mandrin et en déplaçant linéairement le dispositif 26.

Les rangées circonférentielles d'épingles 25e inclinées de façon appropriée, sont destinées à recevoir un fil et à le retenir en contact avec la surface de l'extrémité à peu près plane du mandrin ainsi que sur sa partie arrondie jusqu'au commencement de la partie cylindrique.

D'une façon analogue les rangées circonférentielles d'épingles 25e sur la partie conique sont destinées à empêcher un fil de glisser vers le sommet.

Enfin les épingles 25b implantées dans les parties de surface parallèles à l'axe du mandrin sont destinées à maintenir un écartement régulier des fils, et le passe-fil 31 peut être tourné autour de son axe par le moteur 29 afin de présenter sa section la plus étroite entre les rangées d'épingles.

On dépose ainsi sur le mandrin le nombre désiré de nappes superposées, et on remarquera que si l'on désire qu'une partie quelconque de l'élément soit renforcée il suffit, dans la première phase, d'implanter des épingles aux limites de cette partie, qui permettront d'effectuer une ou plusieurs passes supplémentaires de pose de fil entre ces épingles, en les contournant, dans un sens et dans l'autre.

Il convient de souligner que dans le cas d'une surface évolutive présentant par exemple une partie concave, on peut implanter, dans la première phase, des rangées hélicoïdales d'épingles contre lesquelles on dépose le fil 33.

Après l'achèvement de cette seconde phase de fabrication, on remplace le dispositif 26 par le troisième dispositif de travail 36.

Le fil 50 est enfilé à travers le pince-fil 48 et passe le long de l'aiguille 43 et, dans une troisième phase, on introduit ce fil à travers les nappes croisées déposées sur le mandrin.

Le fil 50 est introduit sous forme de boucles libres par l'aiguille 43 poussée par le vérin 40 et rappelée par le ressort 52, suivant la séquence représentée aux figures 10a à 10f, par piquages successifs.

Le fil 50 est entraîné par l'aiguille 43 à travers les nappes, le pince-fil étant serré, et la course de l'aiguille étant réglée de façon à pénétrer dans la mousse du mandrin, un peu au delà du châs 45 de l'aiguille (figures 10a, 10b, 10c).

Le pince-fil est alors desserré (figure 10d) et l'aiguille remonte en libérant le fil au fur et à mesure (figure 10e) à travers les nappes en formant ainsi une petite boucle non fermée 53 qui est uniquement retenue par la mousse et le frottement dans les nappes, juste au-dessous de l'interface de celle-ci et de la première nappe.

On comprend que la pression élastique de la mousse se refermant sur la boucle après le retrait de l'aiguille d'une part, et le frottement et le serrage des fils des nappes superposées d'autre part lors du retrait de l'aiguille, suffisent pour retenir le fil 50 qui défile librement dans le canal de l'aiguille pendant ce retrait.

Après être ressortie des nappes de fil, on fait remonter l'aiguille au-dessus de la surface des nappes, d'une distance égale à l'épaisseur totale des nappes superposées sur le mandrin augmentée du pas de piquage, c'est-à-dire l'écartement désiré entre deux piqûres (figure 10f).

On actionne alors le pince-fil pour bloquer le fil dans l'aiguille, on déplace le bras 12 d'un pas, et on actionne de nouveau le dispositif pour recommencer le cycle afin de former en continu une grande quantité de boucles 53 avec le même fil 50.

Les épingles implantées dans le mandrin peuvent être retirées au fur et à mesure de la progression du travail du dispositif 36 afin de ne pas gêner sa progression.

La forme de l'aiguille présente une grande importance pour l'exécution de cette troisième phase. En effet les fils 50 utilisés sont le plus souvent des fils de fibres fragiles qui peuvent tendre à se séparer.

En conséquence on a observé que si l'on utilise une aiguille à chas traversant classique, les fibres du fil se désagrègent à la sortie du chas des deux côtés de celui-ci provoquant des bourrages et une rupture du fil.

Pour cette raison, comme représenté à la figure 8, l'aiguille 43, comporte un chas traversant oblique 45 dont le bord éloigné de la pointe 46 présente un arrondi interne 51 autour duquel le fil se plie lors de la pénétration de l'aiguille, évitant ainsi une détérioration du fil, ou une cassure, susceptible de provoquer sa rupture.

D'une façon avantageuse, le chas traversant 45 débouche, à son extrémité opposée à la pointe 46, dans une gorge longitudinale 44 de section partiellement circulaire dont la profondeur décroît progressivement en s'éloignant de la pointe, et dans laquelle passe le fil.

Suivant l'exemple représenté à la figure 9, l'aiguille 43a est creuse et comporte un canal axial 44a qui débouche latéralement et obliquement dans un chas non traversant 45a dont le bord éloigné de la pointe 46a présente un arrondi interne 51a analogue à l'arrondi 51 de l'aiguille 43, et le fil passe à l'intérieur de l'aiguille.

On comprend que grâce à la machine suivant l'invention, le fonctionnement du dispositif 36 peut être très rapide avec un pas très régulier sur toutes les parties de la surface du mandrin en orientant l'ensemble du dispositif 36 de la façon appropriée pour chacune de ces parties de surface.

Ainsi, dans la région d'extrémité opposée au sommet de la partie conique du mandrin, on augmentera progressivement l'inclinaison du dispositif 36 afin que l'aiguille pénètre toujours perpendiculairement à travers les nappes.

On comprend également, bien entendu, que les moteurs M1, M2, M3, 18, 29 et 16 sont commandés de façon appropriée pour effectuer toutes ces opérations au moyen d'un dispositif électronique à mémoire préalablement programmé en conséquence en fonction de la forme de l'élément à réaliser, de type connu ne faisant pas partie de l'invention.

Lorsque l'opération d'introduction des fils à travers les nappes est terminée on procède à l'imprégnation de l'ensemble, soit en laissant l'élément d'armature sur le mandrin, soit en retirant celui-ci au préalable, suivant la technique classique.

Il convient à cet égard de souligner la caractéristique essentielle de l'élément réalisé suivant l'invention, selon laquelle les nappes de fils croisées superposées sont maintenues ensemble, avant l'imprégnation, par les seuls effets conjugués du serrage et du frottement des fils des nappes superposées sur le fil continu qui les traverse en formant des boucles ouvertes successives reliées entre elles sur la surface externe de l'élément.

La demanderesse a constaté que ces seuls effets de serrage et de frottement suffisent pour permettre à un élément d'armature ainsi réalisé suivant l'invention d'être manipulé et de conserver sa forme après retrait du mandrin, et avant son imprégnation. Bien entendu un tel résultat ne peut être obtenu qu'avec au moins trois nappes superposées croisées.

Pour effectuer ce retrait, le procédé le plus simple consiste à détruire le mandrin, par exemple par combustion.

La figure 11 montre la forme de l'élément terminé et fait apparaître l'agencement des fils suivant trois dimensions.

L'utilisation d'épingles provisoires suivant l'invention ne nécessite d'en implanter que quelques centaines pour poser les nappes sur un élément donné tandis que l'utilisation des picots de la technique antérieure nécessite d'en implanter plusieurs dizaines de milliers en tant que fils définitifs sur le même élément.

Par suite, le plus grand espace laissé libre entre les épingles permet de déposer des nappes de fils plus denses, ces fils étant en outre encore serrés par l'introduction des fils par l'aiguille.

Il en résulte un élément dont les caractéristques de résistance sont bien meilleures que celles des éléments de la technique antérieure.

## Revendications

1. Procédé de fabrication d'éléments d'armatures composites tissés en trois dimensions en fibres textiles ménérales, synthétiques ou autres, de formes complexes, à haute résistance aux contraintes thermiques, mécaniques ou thermomécaniques, destinés plus particulièrement à des applications dans le domaine aéronautique ou spatial, du type dans lequel on utilise un mandrin consommable en matière mousse ou similaire ayant extérieurement la forme intérieure de l'élément d'armature à réaliser, on plante des organes rigides dans le mandrin et on applique sur la surface de celui-ci des nappes successives de fils ou de fibres superposées croisées suivant au moins deux directions, on lie lesdites nappes entre elles au moyen de fil ou de fibres qui les traversent perpendiculairement, on imprègne l'ensemble d'un liant durcissable, et on retire le mandrin, caractérisé en ce que lesdits organes rigides sont des épingles implantées provisoirement dans le mandrin de manière à retenir un fil continu de fibres tendu sur lesdites épingles (25a, 25b, 25c, 25d, 25e) et en contact avec la surface du mandrin (15), on tend un fil continu (33) sur lesdites épingles de manière à former successivement au moins trois nappes régulières superposées et croisées, et on introduit à travers lesdites nappes, depuis l'extérieur, un fil continu formant des boucles successives ouvertes, au moyen d'une aiguille (43) dans laquelle passe ledit fil (50) et on retire lesdites épingles.

2. Procédé suivant la revendication 1, caractérisé en ce qu'on implante lesdites épingles (25a, 25b, 25c, 25d, 25e) en des points de la surface du mandrin choisis en fonction de sa forme, pour retenir et maintenir un fil (33) tendu contre sa surface, entre ces épingles de manière à former une nappe régulière, et notamment en tous les points autour desquels on désire déterminer un changement de direction du fil (33).

3. Procédé suivant la revendication 2, caractérisé en ce qu'on implante lesdites épingles (25a, 25b, 25c, 25d, 25e) en rangées circonférentielles et hélicoïdales.

4. Procédé suivant la revendication 3, caractérisé en ce qu'on introduit ledit fil continu (50) à travers lesdites nappes au moyen d'une aiguille (43) ayant une gorge longitudinale (44) qui débouche latéralement et obliquement par un chas (45) traversant ayant un bord présentant un arrondi interne (51).

5. Procédé suivant la revendication 3, caractérisé en ce qu'on introduit ledit fil continu (50) à travers lesdites nappes au moyen d'une aiguille creuse (43a) ayant un canal axial (44a) qui débouche latéralement et obliquement par un chas (45a) non traversant ayant un bord présentant un arrondi interne (51a).

6. Procédé suivant la revendication 4, caractérisé en ce qu'on enfonce l'aiguille (43) à travers lesdites nappes et dans le mandrin (15) de manière que le chas (45) de l'aiguille pénètre entièrement dans la matière du mandrin.

7. Machine de fabrication d'un élément d'armature composite suivant le procédé défini suivant les revendications 1 à 5, qui comprend un bâti, un axe porte-mandrin horizontal rotatif, un mandrin amovible en matière perforable monté sur ledit axe, et des moyens d'entraînement dudit axe en rotation, caractérisée en ce que le bâti (1, 2, 3, 4) porte un bras vertical (12) au-dessus dudit axe (14) et réglable suivant trois axes orthogonaux et comportant à son extrémité inférieure (13) des moyens (17, 19) de fixation pour des dispositifs amovibles de travail (20, 26, 36) et des moyens (18) pour orienter ce dispositif autour d'un axe horizontal.

8. Machine suivant la revendication 7, caractérisée en ce qu'elle comprend un jeu de trois dispositifs de travail adaptés pour coopérer avec ladite extrémité inférieure (13) du bras (12), comprenant un dispositif (20) pour enfoncer les épingles dans le mandrin, un dispositif (26) de pose de fil et un dispositif (36) à aiguille pour enfoncer un fil continu (50) formant des boucles consécutives à travers des nappes croisées de fil déposées sur le mandrin (15).

9. Machine suivant la revendication 7, caractérisée en ce que le dispositif (20) pour enfoncer les épingles est une cloueuse.

10. Machine suivant la revendication 7, caractérisée en ce que le dispositif (26) de pose de fil comprend un passe-fil tubulaire (31) de section transversale aplatie et dont l'orifice de sortie présente un bord interne arrondi (34), monté orientable autour d'un axe vertical (30) d'un moteur (29).

11. Machine suivant la revendication 7, caractérisée en ce que le dispositif (36) pour enfoncer un fil continu comprend un support portant un vérin (40), un bloc (39) coulissant sur le support, relié à la tige de piston du vérin et rappelé par un ressort, et une aiguille (43) et un pince-fil (48) montés sur ledit bloc, ce dispositif (36) étant orientable au moyen d'un moteur (18) dans un plan vertical.

12. Machine suivant la revendication 11, caractérisée en ce que ladite aiguille (43) comporte une gorge longitudinale (44) qui débouche latéralement et obliquement par un chas (45) traversant ayant un bord présentant un arrondi interne (51) sur son côté éloigné de la pointe (46), ladite gorge ayant une section partiellement circulaire de profondeur décroissante en s'éloignant de ladite pointe.

13. Machine suivant la revendication 11, caractérisée en ce que ladite aiguille (43a) est creuse et comporte un canal axial (44a) débouchant latéralement et obliquement dans un chas (45a) non traversant délimité par un bord présentant un arrondi interne (51a).

14. Machine suivant la revendication 7, caractérisée en ce que les moyens de fixation à l'extrémité (13) du bras (12) comprennent un arbre horizontal (19) d'un moteur (18) fixé sur une patte (17) s'étendant dans le prolongement du bras (12).

15. Elément d'armature composite de forme complexe évolutive tissé en trois dimensions et au moins trois directions, comprenant au moins trois nappes régulières de fil superposées et croisées et des fils s'étendant à travers lesdites nappes, imprégné d'un liant polymérisé, caractérisé en ce que lesdites nappes sont initialement maintenues ensemble, avant l'imprégnation et la polymérisation du liant, par les seuls effets conjugués du serrage et du frottement des fis des nappes sur un fil continu (50) qui les traverse en formant sur la surface interne de l'élément des boucles ouvertes successives reliées entre elle sur la surface externe.

## Patentansprüche

1. Verfahren zur Herstellung von Elementen zusammengesetzter, gewebter, dreidimensionaler Umhüllungen aus Textil-, Mineral- und Kunstfasern und anderen in komplexen Formen, mit hoher Widerstandsfähigkeit gegen thermische, mechanische oder thermomechanische Beanspruchungen, die insbesondere für die Anwendung in der Luft- oder Raumfahrt bestimmt sind, jenes Typs, bei dem man einen aufbrauchbaren Dorn aus Schaummaterial oder dgl. verwendet, der außen die Form des Inneren des zu schaffenden Hüllelementes hat, indem man starre Teile in den Dorn einbringt und auf dessen Oberfläche aufeinanderfolgende Schichten aus Fäden oder übereinanderliegenden, nach wenigstens zwei Richtungen sich kreuzenden Fasern aufbringt, man die Schichten mit Hilfe von Fäden oder Fasern, die diese senkrecht durchsetzen, verbindet, man die Anordnung mit einem aushärtbaren Binder imprägniert und man den Dorn dann entfernt, dadurch gekennzeichnet, daß die starren Teile provisorisch in den Dorn eingebrachte Nadeln sind, die einen kontinuierlichen Faden aus über diese Nadeln (25a, 25b, 25c, 25d, 25e) gespannten Fasern halten und in Kontakt mit der Oberfläche des Dornes (15) sind, daß man einen kontinuierlichen Faden (33) derart über die Nadeln spannt, daß nacheinander wenigstens drei übereinanderliegende und sich kreuzende, regelmäßige Schichten gebildet werden und daß man durch die Schichten von außen einen kontinuierlichen Faden einbringt, der aufeinanderfolgende, offene Schlingen bildet, und zwar mittels einer Nadel (43), durch die der Faden (50) hindurchtritt, und daß man die Nadeln entfernt.

2. Verfahren nach Anspruch 1, dadurch gekennzeichnet, daß man die Nadeln (25a, 25b, 25c, 25d, 25e) an Oberflächenpunkten des Dornes einbringt, die in Funktions einer Form gewählt werden, um einen Faden (33) an der Oberfläche zwischen den Nadeln derart zu halten, daß eine regelmäßige Schicht gebildet wird, und insbesondere an allen Punkten, an denen man eine Änderung der Richtung des Fadens (33) zu bestimmen wünscht.

3. Verfahren nach Anspruch 2, dadurch gekennzeichnet, daß man die Nadeln (25a, 25b, 25c, 25d, 25e) in am Umfang liegenden, schraubenförmigen Reihen einbringt.

4. Verfahren nach Anspruch 3, dadurch gekennzeichnet, daß man den kontinuierlichen Faden (50) durch die Schichten mit Hilfe einer Nadel (43) einbringt, die eine Längsnut (44) hat, die seitlich und schräg durch ein durchgehendes Nadelöhr (45) mündet, das einen eine innere Abrundung (51) bildenden Rand hat.

5. Verfahren nach Anspruch 3, dadurch gekennzeichnet, daß man den kontinuierlichen Faden (50) durch die Schichten mit Hilfe einer Hohlnadel (43a) einbringt, die einen axialen Kanal (44a) hat, der seitlich und schräg durch ein nichtdurchgehendes Nadelöhr (45a) mündet, das einen Rand mit einer inneren Abrundung (51a) aufweist.

6. Verfahren nach Anspruch 4, dadurch gekennzeichnet, daß man die Nadel (43) durch die Schichten und in den Dorn (15) derart eindrückt, daß das Nadelöhr (45) vollständig in das Material des Dornes eindringt.

7. Maschine zur Herstellung eines zusammengesetzten Hüllelementes nach dem Verfahren gemäß der Ansprüche 1 bis 5, die einen Rahmen, eine horizontale, den Dorn tragende Drehachse, einen entfernbaren, auf dieser Achse angeordneten Dorn aus perforierbarem Material und Mitnahmeeinrichtungen für die Drehachse aufweist, dadurch gekennzeichnet, daß der Rahmen (I, 2, 3, 4) einen vertikalen Arm (12) oberhalb der Achse (14) trägt, der nach den drei orthogonalen Achsen einstellbar ist und an seinem unteren Ende (13) Einrichtungen (17, 19) zur Befestigung von entfernbaren Arbeitsanordnungen (20, 26, 36) und Einrichtungen (18) zum Ausrichten der Anordnungen um die horizontale Achse besitzt.

8. Maschine nach Anspruch 7, dadurch gekennzeichnet, daß sie einen Satz von drei Arbeitsanordnungen aufweist, adaptiert zum Zusammenwirken mit dem unteren Ende (13) des Armes (12) sowie eine Einrichtung (20) zum Eindrücken der Nadeln in den Dorn, eine Einrichtung (26) zur Anordnung des Fadens und eine Nadeleinrichtung (36) zum Eindrücken eines kontinuierlichen Fadens (50) aufweisen, der aufeinanderfolgende Schlingen durch die den Faden kreuzenden, auf dem Dorn (15) befindlichen Schichten bildet.

9. Maschine nach Anspruch 7, dadurch gekennzeichnet, daß die Einrichtung (20) zum Eindrücken der Nadeln eine Nagelmaschine ist.

10. Maschine nach Anspruch 7, dadurch gekennzeichnet, daß die Einrichtung (26), die den Faden setzt, einen rohrförmigen Fadendurchtritt (31) aufweist, dessen Querabschnitt abgeplattet ist und dessen Austrittsöffnung einen abgerundeten, inneren Rand (34) hat, der um eine vertikale Achse (30) eines Motors (29) ausrichtbar angeordnet ist.

11. Maschine nach Anspruch 7, dadurch gekennzeichnet, daß die Einrichtung (36) zum Eindrücken eines kontinuierlichen Fadens einen, eine Hebeeinrichtung (40) tragenden Träger, einen auf dem Träger verschiebbaren Block (39), der mit der Kolbenstange der Hebeeinrichtung verbunden und durch eine Feder rückgestellt wird, und eine Nadel (43) sowie eine Fadenklemme (48) auf dem Block umfaßt, wobei diese Einrichtung (36) mittels eines Motors (18) in einer vertikalen Ebene ausgerichtet werden kann.

12. Maschine nach Anspruch 11, dadurch gekennzeichnet, daß die Nadel (43) eine Längsnut (44) trägt, die seitlich und schräg durch ein durchgehendes Nadelöhr (45) mündet, das einen Rand hat, der eine innere Abrundung (51) an seiner von der Spitze (46) entfernten Seite aufweist, wobei die Nut einen teilweise kreisförmigen Schnitt hat, der mit Entfernung von der Spitze in der Tiefe abklingt.

13. Maschine nach Anspruch 11, dadurch gekennzeichnet, daß die Nadel (43a) hohl ist und einen axialen Kanal (44a) trägt, der seitlich und schräg in ein nichtdurchgehendes Nadelöhr (45) mündet das durch einen Rand abgegrenzt wird, der eine innere Abrundung (51a) aufweist.

14. Maschine nach Anspruch 7, dadurch gekennzeichnet, daß die Einrichtungen zur Befestigung am Ende (13) des Armes (12) eine horizontale Welle (I9) eines Motors (18) enthalten, der auf einer Befestigungsplatte (17), die sich in der Verlängerung des Armes (12) erstreckt, befestigt ist.

15. Zusammengesetztes Hüllelement mit erweiterbarer, komplexer Form, gewebt in drei Dimensionen und in mindestens drei Richtungen, das zumindest drei regelmäßige, übereinanderliegende, gekreuzte Schichten aus Fäden und Fäden, die sich durch diese Schichten erstrecken, enthält und das mit einem polymerisierten Bindemittel imprägniert ist, dadurch gekennzeichnet, daß diese Schichten anfänglich vor der Imprägnierung und der Polymerisation des Bindemittels durch die einzigen Verbindungseffekte des Spannens und des Reibens der Fäden der Schichten an dem kontinuierlichen Faden (50), der sie durchsetzt, indem er an der inneren Oberfläche des Elementes offene, aufeinanderfolgende, untereinander über die äußere Oberfläche verbundene Schlingen bildet, zusammengehalten werden.

**Claims**

1. Process for manufacturing three-dimensionally woven composite reinforcing elements of textile, mineral, synthetic or other fibres of complex shape and of high resistance to thermal, mechanical or thermo-mechanical stresses, designed more particularly for applications in the aeronautical or space industries, of the type in which one employs a consumable mandrel of foam material or similar having externally the inside shape of the reinforcing element to be produced, rigid members being placed in the mandrel and there being applied on to the surface of the latter successive layers of superposed and crossing thread or fibres following at least two directions, the said layers being bound together by means of thread or fibres which pass through them perpendicularly, the assembly being impregnated with a hardenable binder and the mandrel being withdrawn, characterised in that the said rigid members are pins temporarily implanted in the mandrel in a way such as to retain a continuous thread of fibres stretched over the said pins (25a, 25b, 25c, 25d, 25e) and in contact with the surface of the mandrel (15), a continuous thread (33) is passed over the said pins in a manner such as to form successively at least three regular superposed and crossing layers, and there is introduced through the said layers from the outside a continuous thread forming successive open loops, by means of a needle (43) through which passes the said thread (50), and the said pins are withdrawn.

2. Process according to claim 1 characterised in that the said pins (25a, 25b, 25c, 25d, 25e) are implanted at points on the surface of the mandrel chosen as a function or its shape to retain and hold a thread (33) held against its surface, between these pins in a manner such as to form a regular layer, and in particular at all those points around which one wishes to cause a change in direction of the thread (33).

3. Process according to claim 2 characterised in that the said pins (25a, 25b, 25c, 25d, 25e) are implanted in circumferential and helical rows.

4. Process according to claim 3 characterised in that the said continuous thread (50) is introduced through the said layers by means of a needle (43) having a longitudinal groove (44) which opens laterally and obliquely through a transverse eye (45) having an edge presenting an internal rounded portion (51).

5. Process according to claim 3 characterised in that the said continuous thread (50) is introduced through the said layers by means of a hollow needle (43a) having an axial passage (44a) which opens laterally and obliquely through a non-transverse eye (45a) having an edge presenting an internal rounded portion (51a).

6. Process according to claim 4 characterised in that the needle (43) is forced through the said layers and into the mandrel (15) in such a way that the eye (45) of the needle penetrates entirely into the material of the mandrel.

7. Machine for manufacturing a composite reinforcing element according to the process defined in accordance with claims 1 to 5, comprising a frame, a horizontal rotatable mandrel-carrying spindle, a detachable mandrel of perforatable material mounted on the said spindle and means for causing the said spindle to rotate, characterised in that the frame (1, 2, 3, 4) carries a vertical arm (12) above the said spindle (14) and controllable along three orthogonal axes and having at its lower end (13) means (17, 19) for securing detachable tools (20, 26, 36) and means (18) for orienting this tool around a horizontal axis.

8. Machine according to claim 7 characterised in that it includes a set of three tools designed to co-operate with the said lower end (13) of the arm (12) comprising a tool (20) for forcing pins into the mandrel, a tool (26) for depositing thread and a tool (36) with a needle for forcing a continuous thread (50) forming consecutive loops through crossing layers of thread deposited on the mandrel (15).

9. Machine according to claim 7 characterised in that the tool (20) for inserting the pins is a nailer.

10. Machine according to claim 7 characterised in that the tool (26) for depositing thread comprises a tubular thread guide (31) of flattened transverse section and of which the outlet orifice presents an internal rounded rim (34), mounted orientatably around a vertical spindle (30) of a motor (29).

11. Machine according to claim 7 characterised in that the tool (36) for inserting a continuous thread comprises a support carrying a ram (40), a block (39) sliding on the support, connected to the piston rod of the ram and returned by a spring, and a needle (43) and a thread gripper (48) mounted on the said block, this tool (36) being orientatable in a vertical plane by means of a motor (18).

12. Machine according to claim 11 characterised in that the said needle (43) has a longitudinal groove (44) which opens laterally and obliquely into a transverse eye (45) having an edge presenting an internal rounded portion (51) on its edge furthest from the point (46), the said groove having a section which is part-circular and of a depth which decreases as one moves away from the said point.

13. Machine according to claim 11 characterised in that the said needle (43a) is hollow and has an axial passage (44a) opening laterally and obliquely into a non-transverse eye (45a) defined by an edge predenting an internal rounded portion (51a).

14. Machine according to claim 7 characterised in that the means for locating the end (13) of the said arm (12) comprise a horizontal spindle (19) of a motor (18) secured on a tongue (17) extending as an extension of the arm (12).

15. Composite reinforcing element of complex developed shape woven in three dimensions and at least three directions comprising at least three regular layers of superposed and crossing threads and threads extending through the said layers, impregnated with a polymerised binder, characterised in that the said layers are initially held together, before impregnation and polymerisation of the binder, by the sole joint effects of locking and friction of the threads of the layers on a continuous thread (50) which passes through them forming on the internal surface of the element successive open loops joined together on the external surface.

FIG.1

EP 0 284 497 B1

FIG.11

FIG.8

FIG.9

FIG.2

47

43

44

51
45

46

43a

44a

51a
45a
46a

15

14

EP 0 284 497 B1

FIG.3

# FIG. 4

FIG.5

FIG.6

# FIG.7

FIG.10